# EUROPÄISCHE PATENTSCHRIFT

(11) **EP 1 782 668 B1**
(45) Veröffentlichungstag und Bekanntmachung des Hinweises auf die Patenterteilung: **16.09.2009**
(21) Anmeldenummer: 06021483.0
(22) Anmeldetag: 13.10.2006
(51) Int. Cl.: A01B 29/06, A01B 49/06, A01B 29/04

(54) **Gezogenes landwirtschaftliches Bodenbearbeitungsgerät**
Towed agricultural soil working implement
Remorque pour outil agricole de travail du sol

(30) Priorität: 03.11.2005 DE 102005052920
(43) Veröffentlichungstag der Anmeldung: 09.05.2007
(73) Patentinhaber: Amazonen-Werke H. Dreyer GmbH & Co. KG, 49205 Hasbergen (DE)
(72) Erfinder: Feldhaus, Werner, 27801 Dötlingen/Geveshausen (DE); Ammermann, Wilfried, 26203 Wardenburg (DE); Hoffmann, Karl-Peter, 27798 Hude (DE)

(56) Entgegenhaltungen:
- EP-A- 1 336 330
- EP-A2- 1 529 427
- WO-A2-20/04073381
- DE-U1- 20 313 105

## Beschreibung

Die Erfindung betrifft ein gezogenes landwirtschaftliches Bodenbearbeitungsgerät gemäß des Oberbegriffes des Patentanspruches 1.

Ein derartiges Bodenbearbeitungsgerät ist beispielsweise in der WO 2004/073381 oder der EP1 529 427 beschrieben. Dieses landwirtschaftliche Gerät weist eine aus auf dem Boden abrollenden Einzelsegmenten, beispielsweise Reifenelementen bestehende Bodenwalze auf. Während der Bestellung auf dem Feld werden sämtliche Einzelsegmente, die hier als Reifenelemente ausgebildet sind, gegen den Boden gedrückt und liegen auf diesem auf. Einige dieser als Reifenelemente ausgewählten Einzelsegmente sind als Fahrwerk ausgebildet und können, beispielsweise zum Transport des Gerätes auf Straßen und Wegen gegenüber den übrigen Elementen nach unten gedrückt werden, so dass das Gerät nur auf diesen gegenüber den übrigen Reifenelementen nach unten verstellt an Elementen aufsteht. Durch das nach unten drücken der als Fahrwerk dienenden Reifenelemente gegenüber den übrigen Reifenelementen der Walze, werden gleichzeitig die Bodenbearbeitungswerkzeuge des Bodenbearbeitungsgerätes aus dem Boden heraus und vom Boden abgehoben. Das nach unten drücken der Reifenelemente wird auch beim Wenden am Feldende dazu benutzt, einerseits um nur auf diesen als Fahrwerk dienenden Reifenelemente den Wendevorgang durchzuführen und andererseits gleichzeitig die Bodenbearbeitungswerkzeuge aus dem Boden zu heben. Dieses Wenden am Feldende hat sich in der Praxis auf relativ festen Bodenoberflächen und schweren Böden auch bewährt, jedoch auf leichten Böden und unter nassen und feuchten Bedingungen können die als Fahrwerk dienenden Reifenelemente zu tief einsacken, so dass tiefe Radspuren entstehen und die Bodenbearbeitungswerkzeuge nicht genügend weit vom Boden abgehoben werden.

Der Erfindung liegt die Aufgabe zugrunde, hier in einfacher Weise Abhilfe zuschaffen.

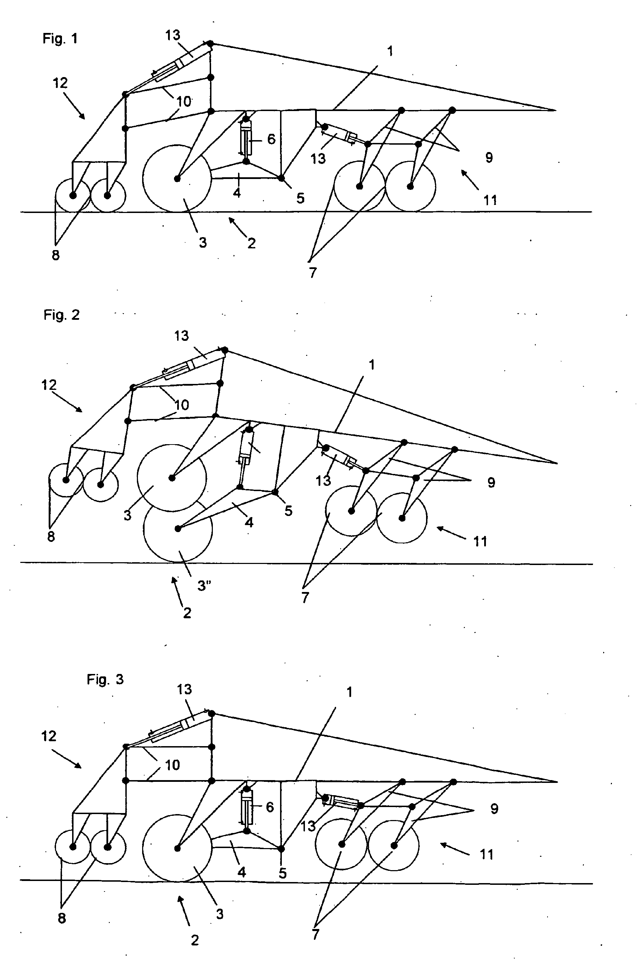

Diese Aufgabe wird erfindungsgemäß durch die kennzeichnenden Merkmale des Patentanspruchs 1 gelöst. Infolge dieser Maßnahmen können je nach erforderlichem Betriebsmodus: Wenden auf festen oder tragfähigen Böden, Wenden auf leichten und nicht tragfähigen Böden, jeweils die entsprechenden Reifenelemente abgesenkt werden, um die Bodenbearbeitungswerkzeuge aus dem Boden und von diesem abzuheben, so dass nur auf den als Fahrwerk dienenden Reifenelementen der Wendevorgang durchgeführt wird oder die Bodenbearbeitungswerkzeuge gegenüber den Reifenelementen angehoben werden, so dass sie aus dem Boden heraus und von diesem abgehoben werden, so dass der Wendevorgang auf sämtlichen, der beispielsweise als Reifenelemente ausgebildeten Einzelsegmenten der Bodenwalze der Wendevorgang durchgeführt werden kann, wie dies insbesondere in den Fig. 2, 3, 4 und 5 entsprechend den jeweiligen Wendemodus zeigen.

Um zum Durchführen des jeweiligen Wendemodus die entsprechenden Stellelemente betätigen zu können, ist erfindungsgemäß vorgesehen, dass zum Wenden am Feldende in einem Wendemodus zum Ausheben der Bodenbearbeitungswerkzeuge die motorischen Stellelemente für die Bodenbearbeitungswerkzeuge von dem Steuersystem derart angesteuert und betätigt werden, dass die Bodenbearbeitungswerkzeuge angehoben werden, und dass zum Wenden am Feldende in dem anderen Wendemodus zum Ausheben der Bodenbearbeitungswerkzeuge die motorischen Stellelemente für die Segmente, beispielsweise Reifenelemente der Bodenwalze derart von dem Steuersystem angesteuert und betätigt werden, dass die Bodenbearbeitungswerkzeuge angehoben werden.

Weitere Einzelheiten der Erfindung sind dem weiteren Unteranspruch, der Beispielsbeschreibung und den Zeichnungen zu entnehmen. Hierbei zeigen
- Fig. 1: das Bodenbearbeitungsgerät in Arbeitsstellung, in Seitenansicht und in Prinzipdarstellung,
- Fig. 2: das Bodenbearbeitungswerkzeug in einem Wendemodus, wobei lediglich die als Fahrwerk dienenden Einzelsegmente abgesenkt sind in Seitenansicht und in Prinzipdarstellung,
- Fig. 3: das Bodenbearbeitungsgerät in einem anderen Wendemodus, wobei die Bodenbearbeitungswerkzeuge gegenüber den Reifenelementen angehoben sind, in Seitenansicht und in Prinzipdarstellung,

- Fig. 4: die Einzelsegmente der Bodenwalze in dem Wendemodus gemäß Fig. 3 in der Ansicht von hinten und in Prinzipdarstellung und
- Fig. 5: die Einzelsegmente der Bodenwalze in dem Wendemodus gemäß Fig. 2 in der Ansicht von hinten und in Prinzipdarstellung.

Das gezogene landwirtschaftliche Bodenbearbeitungsgerät weist einen Zentralrahmen 1 auf. An dem Zentralrahmen 1 sind in nicht dargestellter Weise jeweils seitlich einschwenkbare Seitenrahmen angeordnet. Die Seitenrahmen sind mittels zwischen den Seitenrahmen und dem Zentralrahmen 1 angeordneten Hydraulikzylindern in nicht dargestellter Weise in eine gestreckte Transportstellung ausklappbar und in eine Arbeitsstellung einklappbar, so dass die Breite des Gerätes für den Transport auf 3 m reduziert werden kann.

An dem Zentralrahmen 1 und den Seitenrahmen sind nebeneinander die die Bodenwalze 2 bildenden als Reifenelemente 3 ausgebildete und auf dem Boden abrollende Einzelsegmente 3' angeordnet. Einige der als Reifenelemente ausgebildeten Einzelsegmente der Bodenwalze 2 sind über Tragarme 4 mittels eines Gelenkes 5 bewegbar am Zentralrahmen 1 angeordnet und können mittels eines zwischen dem Zentralrahmen 1 und den Tragarmen 4 dieser als Reifenelemente 3' ausgebildeten Einzelsegmente angeordneten motorischen Stellelemente 6 in eine gegenüber den übrigen als Einzelsegmente ausgebildeten Reifenelementen 3 der Bodenwalze 2 nach unten überragende Position 3" verschwenkt werden. Diese als Hydraulikzylinder 6 ausgebildeten motorischen Stellelemente sind von einem Steuersystem ansteuerbar und betätigbar. Wenn die als Einzelsegmente ausgebildeten Reifenelemente 3' der Bodenwalze in eine gegenüber den übrigen als Reifenelementen 3 ausgebildeten Einzelsegmente der Bodenwalze 1 überragende Stellung 3'' gebracht sind, dienen diese nach unten verschwenkten Reifenelemente 3'' als Fahrwerk des Gerätes.

Vor und hinter der Bodenwalze 2 sind jeweils den Boden bearbeitende Bodenbearbeitungswerkzeuge 7 und 8, die beispielsweise als Scheibenelemente oder als in den Boden eingreifende Grubberzinken ausgebildet sein können, angeordnet. Diese Werkzeuge 7, 8 sind mittels eines Gelenkgliedern 9, 10 aufweisenden Traggerüstes 11, 12 an den Seitenrahmen oder dem Zentralrahmen 1 angelenkt. Zwischen den Gelenkgliedern 9 der Bodenbearbeitungswerkzeuge 7, 8 und dem Seitenrahmen bzw. Zentralrahmen 1 sind als Hydraulikzylinder 13 ausgebildete motorische Stellelemente angeordnet, mittels welcher die Bodenbearbeitungswerkzeuge 7, 8 gegenüber den Seitenrahmen und dem Zentralrahmen 1 und der Bodenwalze 2 angehoben werden können. Diese den Bodenbearbeitungswerkzeugen 7, 8 zugeordneten motorischen Stellelemente, die als Hydraulikzylinder 13 ausgebildet sind, werden über ein Steuersystem angesteuert und betätigt.

Die Funktionsweise des Bodenbearbeitungsgerätes zum Transport auf der Straße und zum Wenden auf dem Feld ist folgende:

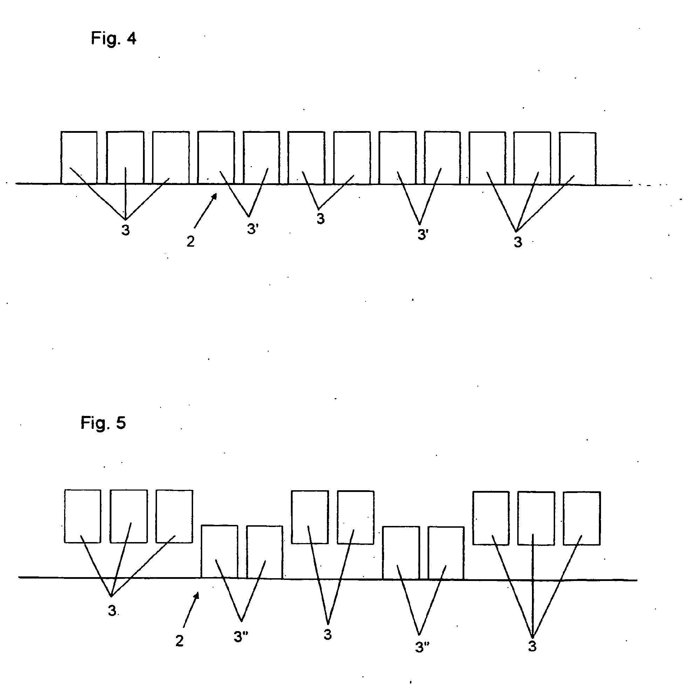

In das Steuersystem sind verschiedene Wendemodi einprogrammiert bzw. abgespeichert. Auf dem Feld, welches eine relativ feste bzw. tragfähige Bodenkonsistenz aufweist, wird der Wendevorgang entsprechend dem Wendemodus nach der Darstellung gemäß Fig. 2 und 5 durchgeführt. In diesem Wendemodus wird das Gerät aus der in Fig. 1 dargestellten Arbeitsstellung in die in Fig. 2 dargestellte Wendemodusstellung gebracht, wobei nur einige der Reifenelemente 3, die als Fahrwerk dienen gegenüber den übrigen Reifenelementen 3 der Bodenwalze 2 und den Bodenbearbeitungswerkzeugen 7, 8 sowie dem Rahmen 1 in die Stellung 3'' abgesenkt. Sie werden also in einem die übrigen Reifenelemente 3 nach unten überragende Stellung 3'' gebracht. Hierzu sind die Hydraulikzylinder 6, die die nach unten absenkbaren Reifenelemente 3', die als Fahrwerk in der abgesenkten Stellung 3'' dienen, zugeordnet sind, ansteuerund somit betätigbar.

Wenn das Gerät auf einem Feld mit einem weniger tragfähigen bzw. leichten Boden eingesetzt wird, in dem die einzelnen Reifenelemente 3', die als Fahrwerk 3" dienen zu tief eindringen können, wird nach dem Wendemodus gemäß Fig. 3 und 4 das Gerät am Feldende gewendet. Hierzu wird der entsprechende Wendemodus über das Steuersystem aufgerufen, so dass die entsprechenden Stellelemente 13 des Gerätes angesteuert und betätigt werden. In diesem Falle werden die Hydraulikzylinder 13, die zwischen den Gelenkgliedern 9, 10 des Traggerüstes 11, 12 der Bodenbearbeitungswerkzeuge 7, 8 angeordnet sind, angesteuert und betätigt, so dass die Bodenbearbeitungswerkzeuge 7, 8 durch Verschwenken der Gelenkglieder 9, 10 des Traggerüstes 11, 12 der Bodenbearbeitungswerkzeuge 7, 8 vom Boden abgehoben werden, wie Fig. 3 zeigt. Sämtliche Reifenelemente 3, 3' der Bodenwalze bleiben auf dem Boden, wie Fig. 3 und 4 zeigen, so dass auf sämtlichen Reifenelementen 3, 3' der Bodenwalze 2 der Wendevorgang durchgeführt wird.

In nicht dargestellter Weise wird beim Transport der Maschine auf Straßen und Wegen die Stellelemente der den als Fahrwerk dienenden Reifenelementen 3' zugeordneten Hydraulikzylinder 6 angesteuert und betätigt. Gleichzeitig werden auch die den Gelenkglieder 9, 10 des Traggerüstes 11, 12 der Bodenbearbeitungswerkzeuge 7, 8 zugeordneten Hydraulikzylinder 13 angesteuert und betätigt, so dass diese ebenfalls weiter gegenüber dem Rahmen 1 angehoben werden, so dass eine ausreichende Bodenfreiheit für den Transport des Gerätes auf öffentlichen Straßen und Wegen gewährleistet ist.

## Patentansprüche

1. Gezogenes landwirtschaftliches Bodenbearbeitungsgerät mit einem Steuersystem, mit einem Rahmen, zumindest einer am Rahmen angeordneten und auf dem Boden abrollenden Einzelsegmente, beispielsweise Reifenelemente aufweisenden Bodenwalze und vor und hinter der Bodenwalze am Rahmen angeordneten und den Boden bearbeitenden Bodenbearbeitungswerkzeugen, die mittels motorischer Stellelemente gegenüber dem Rahmen und der Bodenwalze aushebbar und absenkbar sind, wobei einige der Segmente, beispielsweise Reifenelemente der Bodenwalze als Fahrwerk, insbesondere zum Transport des Gerätes auf Straßen und Wegen, nutzbar und mittels motorischer Stellelemente in eine die übrigen Segmente, beispielsweise Reifensegmente nach unten überragende Position bringbar sind, wobei die motorischen Stellelemente von dem Steuersystem ansteuer- und betätigbar sind, **dadurch gekennzeichnet, dass** über das Steuersystem beim Wenden am Feldende zum Anheben der Bodenbearbeitungswerkzeuge (7,8) je nach vorgegebenem Wendemodus die motorischen Stellelemente (6) für die Segmente (3'), beispielsweise Reifenelemente oder die motorischen Stellelemente (13) für die Bodenbearbeitungswerkzeuge (7,8) ansteuerbar und betätigbar sind, und zwar in der Weise, dass zum Wenden am Feldende in einem Wendemodus zum Ausheben der Bodenbearbeitungswerkzeuge (7,8) die motorischen Stellelemente (13) für die Bodenbearbeitungswerkzeuge (7,8) von dem Steuersystem derart angesteuert und betätigt werden, dass die Bodenbearbeitungswerkzeuge (7,8) angehoben werden, und dass zum Wenden am Feldende in dem anderen Wendemodus zum Ausheben der Bodenbearbeitungswerkzeuge (7,8) die motorischen Stellelemente (6) für die Segmente, beispielsweise Reifenelemente (3') der Bodenwalze (2) derart von dem Steuersystem angesteuert und betätigt werden, dass die Bodenbearbeitungswerkzeuge (7,8) angehoben werden.

2. Bodenbearbeitungsgerät nach Anspruch 1, **dadurch gekennzeichnet, dass** in dem anderen Wendemodus zum Wenden am Feldende zusätzlich zu dem Betätigen der motorischen Stellelemente (6) für die Segmente, beispielsweise Reifenelemente (3') auch die motorischen Stellelemente (13) für die Bodenbearbeitungswerkzeuge (7,8) von dem Steuersystem derart angesteuert und betätigt werden, dass die Bodenbearbeitungswerkzeuge (7,8) zusätzlich gegenüber dem Rahmen (1) und der Walze (2) angehoben werden.

## Claims

1. Trailed agricultural soil cultivation implement with a control system, having a frame, at least one individual segment arranged on the frame and rolling on the ground, for example a ground roller exhibiting tyre elements, and soil cultivation tools arranged on the frame before and behind the ground roller for cultivating the soil, which are capable of being lifted out and lowered in relation to the frame and the ground roller by means of power-operated actuating elements, some of the segments, for example tyre elements of the ground roller, being capable of being utilized as a travelling device, in particular for the purpose of transporting the implement on roads and tracks and capable of being brought by means of power-operated actuating elements into a position projecting downwards beyond the other segments, for example tyre segments, the power-operated actuating elements being capable of being actuated and operated by the control system, **characterized in that** the power-operated actuating elements (6) for the segments (3'), for example tyre elements, or the power-operated actuating elements (13) for the soil cultivation tools (7, 8), are capable of being actuated and operated via the control system when turning on the headland for the purpose of lifting the soil cultivation tools (7, 8) depending on the predetermined turning mode, and, to be precise, in such a way that, for the purpose of turning on the headland, in a turning mode for the purpose of lifting the soil cultivation tools (7, 8), the power-operated actuating elements (13) for the soil cultivation tools (7, 8) are actuated and operated by the control system in such a way that the soil cultivation tools (7, 8) are lifted, and that, for the purpose of turning on the headland in the second turning mode, for the purpose of raising the soil cultivation tools (7, 8), the power-operated actuating elements (6) for the segments, for example tyre elements (3') of the ground roller (2), are actuated and operated by the control system in such a way that the soil cultivation tools (7, 8) are lifted.

2. Soil cultivation implement according to Claim 1, **characterized in that**, in the second turning mode for the purpose of turning on the headland, in addition to the operation of the power-operated actuating elements (6) for the segments, for example tyre elements (3'), the power-operated actuating elements (13) for the soil cultivation tools (7, 8) are also actuated and operated by the control system in such a way that the soil cultivation tools (7, 8) are lifted additionally in relation to the frame (1) and the roller (2).

## Revendications

1. Machine agricole tractée pour le travail du sol comportant :
- un système de commande,
- un châssis avec un rouleau de sol installé sur le châssis et comportant des éléments séparés, roulant sur le sol, par exemple des éléments pneumatiques et des outils pour le travail du sol, installés devant et derrière le rouleau sur le châssis, ces outils pouvant être relevés et abaissés par rapport au châssis et au rouleau, par les actionneurs motorisés,
- certains des segments, par exemple des éléments pneumatiques du rouleau de sol, pouvant s'utiliser comme chassis de roulage notamment pour transporter la machine sur les routes et les chemins et ces segments peuvent être mis dans une position qui dépasse vers le bas celle des autres segments par exemple des segments pneumatiques, par les actionneurs motorisés,
- les actionneurs motorisés étant commandés et manoeuvrés par le système de commande,
**caractérisée en ce que**
- lors de la manoeuvre de retournement à l'extrémité du champ, pour soulever les outils de travail du sol (7, 8) selon le mode de retournement défini, le système de commande actionne les actionneurs motorisés (6) des segments (3') par exemple les éléments pneumatiques ou les actionneurs motorisés (13) des outils pour le travail du sol (7, 8) et il les manoeuvre de façon que pour la manoeuvre de retournement à l'extrémité du champ, selon un premier mode de retournement, pour soulever les outils de travail du sol (7, 8), les actionneurs motorisés (13) des outils (7, 8) sont commandés et manoeuvrés par le système de commande pour soulever les outils (7, 8), et
- pour la manoeuvre de retournement à l'extrémité du champ selon le second mode de retournement, pour soulever les outils de travail du sol (7, 8), le système de commande, met en oeuvre et commande les actionneurs motorisés (6) des segments, par exemple des éléments pneumatiques (3') du rouleau de sol (2) pour soulever les outils de travail du sol (7, 8).

2. Machine pour le travail du sol selon la revendication 1,
**caractérisée en ce que**
dans le second mode de retournement, pour la manoeuvre de retournement à l'extrémité du champ, en plus de l'actionnement des actionneurs motorisés (6) des segments par exemple des éléments pneumatiques (3'), le système de commande met en oeuvre et commande également les actionneurs motorisés (13) des outils pour le travail du sol (7, 8) pour que ces outils (7, 8) soient en plus soulevés par rapport au châssis (1) et au rouleau (2).
